Europäisches Patentamt

European Patent Office

Office européen des brevets

(19)

(11) Numéro de publication: **0 165 116 B1**

(12) **FASCICULE DE BREVET EUROPEEN**

(45) Date de publication du fascicule du brevet:
21.02.90

(21) Numéro de dépôt: 85400894.3

(22) Date de dépôt: 07.05.85

(51) Int. Cl.⁵: **G 21 F 7/02,** G 01 V 9/04,
G 02 B 7/00, G 02 B 6/38,
G 02 B 6/26, G 01 N 21/25

(54) **Système de détection optique à distance.**

(30) Priorité: **10.05.84 FR 8407215**

(43) Date de publication de la demande:
**18.12.85 Bulletin 85/51**

(45) Mention de la délivrance du brevet:
**21.02.90 Bulletin 90/8**

(84) Etats contractants désignés:
**DE FR GB**

(56) Documents cités:
**CH-A- 474 068**
**FR-A- 2 245 945**
**FR-A- 2 479 485**
**US-A- 3 265 584**
**US-A- 3 392 623**
**US-A- 3 790 290**
**US-A- 3 984 174**
**US-A- 4 012 635**

(73) Titulaire: **COMMISSARIAT A L'ENERGIE ATOMIQUE,
31/33, rue de la Fédération, F-75015 Paris (FR)**

(72) Inventeur: **Boisde, Gilbert, 30, rue Charles de Gaulle,
F-91440 Bures Sur Yvette (FR)**
Inventeur: **Bonnejean, Claude, 2, Allée Bois Dève
Courcouronnes, F-91000 Evry (FR)**
Inventeur: **Lelong, Pierre, 2, rue Jiervex, F-75017 Paris
(FR)**

(74) Mandataire: **Mongrédien, André et al, c/o
BREVATOME 25, rue de Ponthieu, F-75008 Paris (FR)**

ACTORUM AG

## Description

La présente invention se rapporte à un système de détection optique permettant de détecter à distance des objets se déplaçant à l'intérieur d'une enceinte telle qu'une enceinte de confinement nucléaire, et cela à l'échelle industrielle, c'est-à-dire sur une distance pouvant dépasser deux mètres. Par «objects», on entend ici des corps solides.

On connaît du document US-A-3 392 623 un système de détection optique conçu pour mesurer l'absorption d'une lumière monochromatique par un fluide contenu dans un récipient. Ce système comprend un faisceau de fibres optiques par lequel la lumière est dirigée simultanément vers un photomultiplicateur et vers une sonde que l'on place dans le récipient. La sonde comprend une lentille qui dirige la lumière vers un réflecteur, par lequel la lumière revient vers le faisceau de fibres, qui la dirige également sur le photomultiplicateur. Ce dernier.reçoit à tour de rôle la lumière de référence en provenance de la source et la lumière en provenance de l'échantillon fluide.

Par ailleurs, les documents US-A-4 012 635 et US-A-3 790 290 décrivent des détecteurs optiques de présence d'un objet, fonctionnant selon le principe de l'autocollimation.

Enfin, le document US-A-3 265 584 montre qu'il est connu de faire traverser les parois de l'enceinte de confinement d'un réacteur nucléaire par un faisceau de fibres optiques, pour observer depuis l'extérieur le comportement des assemblages constituant le coeur de ce réacteur.

L'introduction de différentes machines à l'intérieur d'une enceinte de confinement ou de plusieurs enceintes communiquant entre elles en vue de réaliser un véritable atelier de fabrication ou de traitement d'objets en milieu confiné pose de nombreux problèmes lorsqu'on désire réaliser la conduite automatique de cet atelier. En effet, les capteurs auxquels on a le plus fréquemment recours à cette occasion posent des problèmes d'installation et de maintenance difficiles sinon impossibles à résoudre lorsque le milieu confiné est dangereux, notamment radioactif et impose des contraintes de sûreté particulièrement sévères.

Compte tenu de ces conditions d'utilisation particulières, l'invention s'est fixé pour premier objectif de réaliser un système de détection à distance dont les composants actifs nécessitant un entretien sont placés à l'extérieur de l'enceinte.

Pour atteindre cet objectif, il a été naturellement envisagé d'avoir recours à un système de détection optique faisant appel à des fibres optiques pour transmettre les informations depuis l'extérieur de l'enceinte vers l'intérieur et inversement. De plus, afin de perturber aussi peu que possible le confinement de l'enceinte, on a pensé à utiliser une seule fibre optique pour assurer le transfert des informations dans les deux sens, c'est-à-dire à l'aller et au retour.

Lorsqu'on cherche à mettre cette idée en pratique, de nombreuses difficultés se présentent si l'on désire que la portée du détecteur ne soit pas limitée à quelques centimètres. En effet, compte tenu de la divergence du faisceau sortant d'une fibre optique, l'utilisation de la même fibre pour assurer les trajets aller et retour de la lumière nécessite de transformer de façon très précise le faisceau sortant de la fibre optique en un faisceau quasiment parallèle afin que les pertes entre la lumière sortant de la fibre et la lumière y pénétrant en retour soient aussi faibles que possible. En l'absence d'une telle caractéristique, et compte tenu des signaux parasites inhérents au système il s'avère pratiquement impossible de détecter à coup sûr la présence ou l'absence d'un objet à la distance souhaitée dans des conditions industrielles. Cela est encore plus vrai lorsque la détection s'accompagne d'une mesure de la concentration d'un produit dans une solution.

D'autre part, la traversée de la paroi de l'enceinte par une fibre optique pose, du point de vue du confinement, un problème difficile à résoudre.

La présente invention a précisément pour objet un système de détection optique à distance présentant les caractéristiques énoncées précédemment et permettant en outre d'effectuer une mesure de présence ou d'absence d'un objet sur une distance pouvant dépasser deux mètres et, éventuellement, une mesure de la concentration d'un produit dans une solution, sans que le confinement de l'enceinte dans laquelle se déplace cet objet en soit affecté.

Dans ce but et conformément à l'invention, il est proposé un système de détection optique à distance comprenant:

– une source lumineuse émettant un faisceau lumineux aller focalisé sur une première extrémité d'un conducteur de lumière;

– une lentille montée à l'autre extrémité du conducteur de lumière;

– des moyens de réflexion placés en face de ladite lentille et rétro-réfléchissant le faisceau sortant de cette dernière à 180° vers le conducteur de lumière, au travers de ladite lentille;

– des moyens pour séparer le faisceau réfléchi du faisceau aller; et

– des moyens pour mesurer l'intensité lumineuse d'une partie au moins du faisceau réfléchi renvoyé par lesdits moyens de séparation,

ce système étant caractérisé par le fait qu'il est appliqué à la détection optique à distance d'objets se déplaçant selon un trajet donné à l'intérieur d'une enceinte de confinement d'une cellule étanche; le conducteur de lumière étant une fibre optique monobrin, et la lentille étant une lentille épaisse servant de hublot étanche pour l'enceinte de confinement et transformant le faisceau lumineux aller sortant de ladite autre extrémité de la fibre optique en un faisceau quasiment parallèle coupant le trajet des objets à détecter; un embout de positionnement et de centrage étant monté de façon étanche dans une paroi de l'enceinte de confinement et supportant de façon étanche la lentille ainsi qu'une pièce de positionnement et de centrage de ladite autre extrémité de la fibre optique, de telle sorte que l'axe optique de la lentille est confondu avec l'axe géométrique de cette autre extrémité; les moyens de réflexion étant placés dans l'enceinte de confinement, en arrière du trajet des objets à détecter, par rapport à la lentille, ou placés sur ces objets; et les moyens pour séparer le faisceau réfléchi du faisceau aller étant situés entre ladite source et ladite première extrémité de la fibre optique.

Conformément à une réalisation particulière de l'invention, la pièce de positionnement et de centrage comporte un piston logé dans un alésage formé dans ledit embout et débouchant vers l'extérieur de la paroi de l'enceinte, de telle sorte que ladite autre extrémité de la fibre optique peut être introduite dans l'embout en appliquant un fluide sous pression sur ledit piston, ladite pièce supportant de plus des moyens élastiques coopérant avec une partie élargie dudit alésage pour appliquer ladite pièce contre une butée formée dans l'embout. L'interchangeabilité de la fibre optique est ainsi assurée sans que cela affecte la qualité du positionnement et du centrage de l'extrémité de la fibre par rapport à la lentille.

Selon un autre aspect avantageux de l'invention, un certain nombre de parasites optiques sont éliminés en prévoyant entre le plan de coupe de la première extrémité de la fibre optique et un plan perpendiculaire à son axe géométrique un angle inférieur à l'angle d'acceptance propre de la fibre, les moyens de séparation comprenant un plan semi-réfléchissant déviant le faisceau réfléchi d'environ 90° vers les moyens de détection.

Ce dernier aspect de l'invention peut encore être perfectionné en inclinant de moins de 20° et, de préférence, de 5° le plan semi-réfléchissant par rapport à un plan de référence faisant un angle de 45° par rapport à l'axe optique du faisceau incident.

On décrira maintenant, à titre d'exemple non limitatif, un mode de réalisation de l'invention en se référant aux dessins annexés dans lesquels:

- la figure 1 est une vue en coupe partielle représentant de façon schématique un système de détection optique à distance réalisé conformément aux enseignements de la présente invention,

- la figure 2 est une vue en coupe longitudinale représentant le montage de l'extrémité de la fibre optique du système de la figure 1 dans la paroi de l'enceinte ainsi que le montage dans cette même paroi d'une lentille épaisse, ici de type sphérique,

- la figure 3 est une vue schématique à plus grande échelle illustrant l'élimination de certains faisceaux optiques parasites grâce à l'inclinaison du plan de coupe de l'extrémité de la fibre par rapport à la normale à l'axe optique de celle-ci, conjuguée avec l'action ultérieure du cube séparateur, et

- la figure 4 est une vue comparable à la figure 3 illustrant l'influence supplémentaire de l'inclinaison du cube séparateur sur l'élimination des rayonnements lumineux parasites.

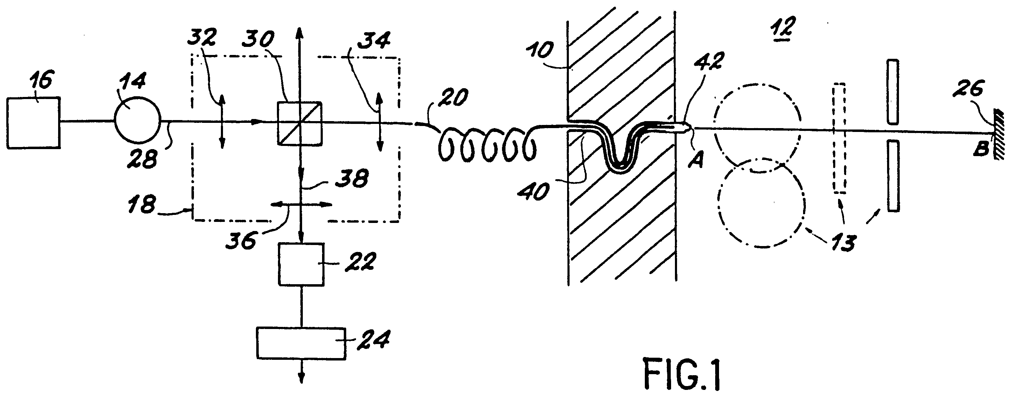

Sur la figure 1, on a représenté seulement une partie d'une paroi de protection 10 de l'enceinte de confinement d'une cellule étanche 12, à l'intérieur de laquelle se déplacent des objets tels que 13 selon une trajectoire donnée et dont on désire détecter la présence ou l'absence sur un segment rectiligne A, B pouvant dépasser 2 m, en introduisant un minimum d'éléments nécessitant une maintenance à l'intérieur de la cellule 12.

A cet effet, le système de détection optique selon l'invention comprend, à l'extériur de l'enceinte étanche, une source lumineuse 14 équipée d'une alimentation 16, un duplexeur optique 18, une fibre optique monobrin 20, un détecteur 22, ainsi q'un système à seuil tel qu'une balance optoélectronique 24 associée au détecteur 22. Le système comprend de plus, à l'intérieur de la cellule 12, un dispositif réfléchissant 26.

La source lumineuse 14 peut être notamment une source de lumière blanche, un laser ou une diode électroluminescente. Ainsi, on peut utiliser par exemple une source laser hélium-néon de 4 mW émettant à la longueur d'onde de 632,8 nanomètres, ou une diode électroluminescente par exemple à 850 nanomètres, modulée en fréquence (par exemple 77 kHz) et de puissance de l'ordre de quelques milliwatts et de préférence comprise entre 2 et 6 mW.

Le faisceau lumineux émis par la source 14, dont l'axe optique est représenté schématiquement en 28 sur la figure 1, traverse sans déviation le duplexeur optique 18, pour être focalisé sur une première extrémité de la fibre optique 20, placée dans le prolongement de l'axe optique 28. Cette focalisation est réalisée de préférence directement par les lentilles que comporte le duplexeur 18.

En effet, on voit sur la figure 1 que le duplexeur 18 comporte, en plus d'un cube séparateur 30 remplissant la fonction de duplexage optique proprement dite, trois lentilles ou ensembles de lentilles 32, 34 et 36. Le cube séparateur 30 est disposé dans le trajet du faisceau lumineux émis par la source 14 et dont l'axe optique est représenté en 28 sur la figure. Il peut être remplacé par tout système analogue semi-réfléchissant tel qu'une lame semi-transparente définissant un plan semi-réfléchissant incliné sensiblement à 45° par rapport à l'axe optique 28 et permettant à la lumière arrivant d'un côté (de la gauche sur la figure 1) de traverser cette surface pour moitié (s'il s'agit d'une lame semi-réfléchissante 50/50) toute en déviant vers le haut à environ 90° l'autre moitié des rayons lumineux. De même, lorsque la lumière arrive de la droite, une moitié est déviée vers le bas (où se trouve le détecteur) et l'autre moitié est transmise directement.

Les lentilles 32 et 34 sont disposées de part et d'autre du cube semi-réfléchissant 30, respectcivement du côté de la source 14 et du côté de la fibre optique 20. La lentille 36 est disposée quant à elle entre le cube semi-réfléchissant 30 et le détecteur 22, c'est-à-dire sur le trajet du faisceau lumineux renvoyé à 90° par le cube semi-réfléchissant 30 et dont l'axe optique 38 est représenté sur la figure 1.

Selon les propriétés bien connues des fibres optiques, le faisceau émis par la source 14 est focalisé sur la première extrémité de la fibre 20 et transmis jusqu'à l'autre extrémité de celle-ci, quelle que soit la configuration donnée à la fibre optique. Cette possibilité, qui permet de positionner et d'orienter à volonté chacune des extrémités de la fibre par rapport à l'autre est représentée schématiquement par des spires sur la figure 1.

Conformément à une caractéristique importante de l'invention, la fibre optique 20 est utilisée pour transmettre l'information optique en provenance de la source 14 jusqu'à l'intérieur de la cellule 12. A cet effet, l'autre extrémité de la fibre optique 20 traverse la paroi de l'enceinte de confinement 10 selon un trajet de préférence en chicane permettant d'assurer la protection biologique. Ce trajet en chicane est représenté schématiquement en 40 sur la figure 1.

L'extrémité correspondante de la fibre optique 20 coïncidant pratiquement avec le point A du segment AB sur lequel on doit détecter la présence ou l'absence d'un objet 13, des moyens doivent également être prévus pour assurer le maintien du confinement de la cellule 12, en dépit de la traversée d'une paroi de celle-ci par la fibre optique, et aussi pour tenir compte de la divergence du faisceau sortant de la fibre optique.

Pour remplir ces deux fonctions, on a recours conformément à l'invention à une lentille épaisse 42 servant de hublot étanche et dont la description sera faite ultérieurement. Compte tenu de sa situation, la lentille 42 est réalisée en un matériau insensible aux rayonnements Y, tel que de la silice synthétique.

L'axe géométrique de l'extrémité de la fibre optique 20 étant confondu avec la direction définie par le segment AB, le faisceau lumineux en provenance de la source 14 et focalisé par la lentille 42 devient, à l'intérieur de la cellule 12, un faisceau quasiment parallèle qui vient heurter avec un axe optique centré au point B le dispositif réfléchissant 26.

Ce dispositif réfléchissant 26 peut être constitué soit simplement par un miroir plan perpendiculaire à l'axe optique du faisceau incident, soit par un rétroréflecteur ou encore par un écran à billes. Dans ces deux derniers cas, qui permettent de réduire les pertes optiques, le réflecteur ou l'écran sont également disposés sensiblement perpendiculairement au faisceau incident.

De préférence, on utilisera pour réaliser ce dispositif réfléchissant 26 des matériaux tels que de l'acier inoxydable poli résistant aux conditions particulières régnant à l'intérieur de la cellule. Des moyens pour changer le dispositif réfléchissant 26 peuvent également être prévus. A titre indicatif, on notera que le dispositif réfléchissant présente un diamètre minimum de 10 cm. On peut également placer le dispositif réfléchisant sur l'objet à détecter.

Conformément à l'invention, la lentille 42 servant de hublot étanche et le dispositif réfléchissant 26 sont les seules pièces placées dans la cellule 12, et il est à noter que ces pièces sont fixes. Afin que les faces optiques de ces deux pièces restent propres, on peut prévoir un dispositif de nettoyage, par exemple par soufflage d'air, évitant le dépôt de matières sur ces faces.

Le faisceau réfléchi par le dispositif 26 suit le même chemin que le faisceau incident et pénètre à nouveau, au travers de la lentille épaisse 42, dans la fibre optique 20, qui assure ainsi à la fois le cheminement aller et le cheminement retour de la lumière. Le faisceau renvoyé par le dispositif réfléchissant 26 parvient ainsi jusqu'à l'extrémité de la fibre optique 20 adjacente au duplexeur optique 18. Le cube semi-réfléchissant 30 du duplexeur a pour effet de réfléchir à environ 90° ce faisceau en retour vers le détecteur 22. L'axe optique de ce faisceau réfléchi est désigné par la référence 38 sur la figure 1. La balance optoélectronique 24 associée au détecteur 22 permet alors de détecter par tout ou rien la présence ou l'absence d'un faisceau lumineux en retour, en comparant les informations recueillies par le détecteur 22 à un seuil dont le réglage est effectué de façon à tenir compte de la lumière parasite du système optique.

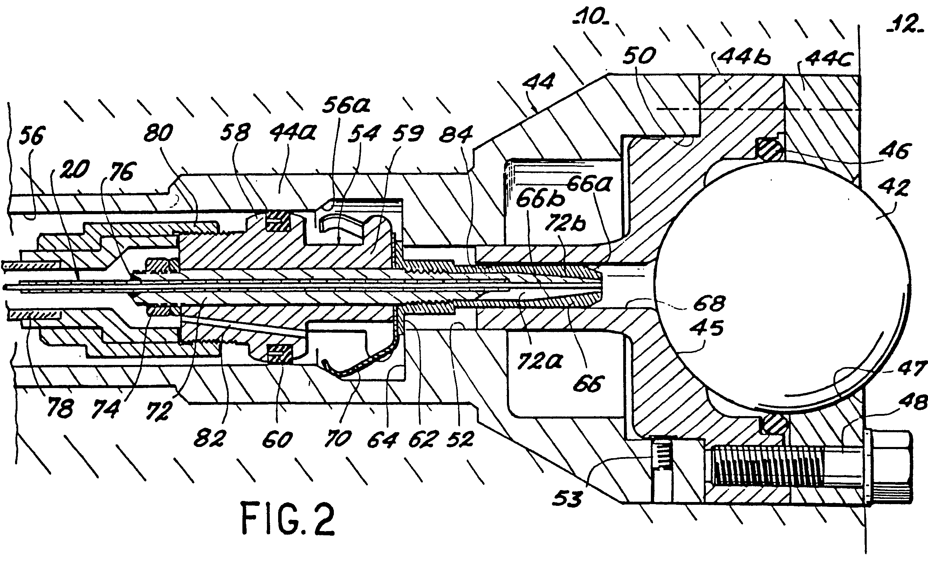

Si l'on se réfère à présent à la figure 2, on reconnaît sur celle-ci l'extrémité de la fibre optique 20 située pratiquement à l'intérieur de la cellule 12.

On reconnaît aussi la lentille épaisse 42 formant hublot, qui est représentée de forme sphérique mais qui pourrait présenter une forme différente sans sortir du cadre de l'invention. En particulier, la lentille 42 pourrait ne comporter que deux parties en forme de calottes sphériques sur ses faces avant et arrière situées respectivement à l'intérieur de la cellule 12 et en vis-à-vis de l'extrémité de la fibre optique 20. Le reste de la lentille présente alors une forme quelconque et notamment cylindrique, de diamètre suffisant pour éviter que certains rayons lumineux ne se réfléchissent à la périphérie de la lentille et n'introduisent des rayons parasites diminuant la sensibilité du système et donc sa portée. Dans le même esprit, la face arrière de la lentille 42 adjacente à l'extrémité de la fibre optique 20 pourrait également être plane.

Afin de réduire les pertes optiques lors du trajet aller et retour de la lumière à l'intérieur de la cellule 12, la lentille 42 doit être positionnée de façon très précise par rapport à l'extrémité adjacente de la fibre optique 20. En particulier, l'axe géométrique de cette dernière doit être pratiquement confondu avec l'axe optique de la lentille 42 et la distance séparant ces deux organes doit être telle que l'extrémité de la fibre soit placée au foyer de la lentille.

Conformément à une caractéristique importante de l'invention, en plus de ses propriétés optiques, la lentille 42 remplit également la fonction de hublot étanche permettant de maintenir le confinement de la cellule 12.

Afin de remplir ces différentes fonctions, on voit sur la figure 2 que la lentille 42 ainsi que l'extrémité de la fibre optique 20 sont placées dans un embout de positionnement et de centrage 44, ce dernier étant lui-même monté de façon étanche dans la paroi de l'enceinte de confinement 10. L'embout 44 est formé d'une pièce tubulaire 44a servant à loger l'extrémité de la fibre optique et de deux pièces 44b et 44c entre lesquelles est fixée de façon étanche, par l'intermédiaire d'un joint torique métallique 46, la lentille formant hublot 42. A cet effet, chacune des pièces 44b et 44c comporte une portée sphérique 35 et 47, respectivement.

L'assemblage des pièces 44b et 44c de l'embout est réalisé par exemple au moyen de vis 48 et l'ensemble constitué par ces deux pièces et par la lentille 42 est centré et positionné par rapport à la pièce 44a grâce à un prolongement étagé de la pièce 44b qui vient se loger à la fois dans un embrèvement 50 et dans un alésage 52 de la pièce 44a. La fixation est réalisée par exemple au moyen de vis 53 entre cuir et chair.

Afin de permettre le remplacement éventuel de la fibre optique 20, celle-ci n'est pas fixée directement à l'intérieur de l'embout 44, mais solidarisée d'une pièce 54 de positionnement et de centrage reçue de façon démontable dans l'embout 44, d'une façon telle que son positionnement et son centrage par rapport à ce dernier et, par conséquent, par rapport à la lentille 42 soient réalisés avec une grande précision.

A cet effet, la pièce tubulaire 44a comporte un alésage 56 débouchant vers l'extérieur de la paroi de l'enceinte 10 et dont le diamètre est légèrement supérieur au diamètre d'un piston 58 formé sur une première partie 59 de la pièce 54. Ce piston 58 porte à sa périphérie un joint d'étanchéité 60 qui coopère de façon étanche avec l'alésage 56.

Cette configuration permet, en injectant de l'air comprimé ou tout autre fluide sous pression à l'extrémité de l'alésage 56, d'introduire la pièce 54 et l'extrémité de la fibre optique 20 qu'elle supporte jusqu'à la position souhaitée. Cette position est définie par la venue en butée d'un épaulement 62 formé sur une seconde partie 66 de la pièce 54 contre un épaulement 64 formé dans le fond de l'alésage 56. Dans cette position, le centrage de l'extrémité de la fibre optique 20 par rapport à la lentille 32 est réalisé avec précision grâce à l'introduction de l'extrémité en saillie de la partie 66 de la pièce 54 dans un alésage de plus petit diamètre 68 formé dans la pièce 44b. Cette configuration est rendue possible par le fait que l'alésage 52 débouche dans le fond de l'alésage 56. Pour faciliter l'introduction de la partie 66 de la pièce 54 dans l'alésage 68, l'extrémité 66a de cette partie 66 est de préférence fuselée comme on l'a représenté sur la figure 2.

La description qui précède fait apparaître que c'est la pièce 44b qui assure à la fois le centrage de la lentille 42 et le centrage de l'extrémité de la fibre optique 20. Ce centrage n'est donc entaché d'aucune erreur résultant d'un mauvais positionnement de deux pièces lors de leur assemblage.

Afin de garantir un bon appui de l'épaulement 62 sur l'épaulement 64, la pièce 54 supporte entre ses parties 59 et 66 une lame de ressort 70 comportant trois doigts dont les extrémités recourbées viennent s'appliquer élastiquement contre une partie tronconique 56a formée à l'entrée d'une zone de plus grand diamètre constituant le fond de l'alésage 56, lorsque l'épaulement 62 est en appui contre l'épaulement 64. Cette coopération de l'extrémité des doigts du ressort 70 avec la partie tronconique 56a a pour effet de solliciter l'épaulement 62 en appui contre l'épaulement 64. Le positionnement longitudinal de l'extrémité de la fibre optique 20 par rapport à la lentille 42 est ainsi parfaitement assuré.

Dans le mode de réalisation représenté sur la figure 2, la fixation de l'extrémité de la fibre optique 20 à l'intérieur de la pièce 54 est assurée avant son introduction dans l'embout 44 à l'aide d'une fixation mécanique du type «pince tulipe». Cette fixation se compose pour l'essentiel d'un manchon 72 dans lequel est reçue l'extrémité de la fibre optique 20. L'extrémité de ce manchon adjacente à l'extrémité de la fibre optique présente au moins deux fentes radiales 72a, de telle sorte que le diamètre interne du manchon peut être réduit à ce niveau sous l'effet d'un effort radial dirigé vers l'axe du manchon. Cet effort est appliqué en vissant sur l'extrémité du manchon 72 la partie 66 de la pièce 54, la face interne de cette partie 66 présentant au voisinage de son extrémité une partie tronconique 66b dont le diamètre va en diminuant jusqu'à son extrémité. Cette partie tronconique 66b coopère avec une partie tronconique complémentaire 72b formée sur l'extrémité du manchon 72. On pince ainsi l'extrémité, éventuellement dénudée, de la fibre optique 20 à l'intérieur du manchon 72.

Afin de fixer la partie 59 de la pièce 54 sur le manchon 72, l'extrémité opposée de celui-ci est également filetée et reçoit un écrou et un contre-écrou 74.

La fixation mécanique de l'extrémité de la fibre optique 20 dans la pièce 54 est complétée par un collage obtenu en introduisant une résine 76 entre la fibre optique 20 et la partie du manchon 72 qui n'a pas été déformée par le serrage mécanique.

Un tuyau métallique flexible 78 est fixé sur l'extrémité arrière de la pièce 54, par l'intermédiaire d'une pièce de raccordement 80, afin de protéger la fibre optique 20.

Compte tenu du caractère étanche de la fixation de la lentille 42 à l'intérieur de l'embout 44, il est nécessaire de prévoir une évacuation de l'air contenu dans l'alésage 56 lors de l'introduction de la pièce 54 supportant l'extrémité de la fibre optique 20. Ce résultat est obtenu principalement en prévoyant dans la partie 59 de la pièce 54 un passage 82 reliant la face avant du piston 58 à la zone annulaire définie entre la fibre optique 20 et le tuyau flexible 78. En fin de course, lorsque la partie en saillie 66 pénètre dans l'alésage 68, l'air contenu dans ce dernier est évacué par une rainure longitudinale 84 formée dans cet alésage.

Grâce aux caractéristiques optiques de la lentille épaisse 42 et au positionnement précis de l'extrémité de la fibre optique 20 par rapport à cette lentille obtenus à l'aide de la structure qui vient d'être décrite, il est possible, bien que le faisceau sortant de la fibre optique soit un faisceau divergent faisant habituellement un angle d'environ 23°, de transformer ce faisceau en un faisceau pratiquement parallèle centré sur l'axe commun à l'axe optique de la lentille 42 et à l'axe géométrique de l'extrémité de la fibre optique 20. En pratique cela signifie que les dispositions qui viennent d'être décrites permettent de limiter l'angle de divergence du faisceau émis à l'intérieur de la cellule 12 à une valeur inférieure à 1° pour une fibre de diamètre égal ou inférieur à 1 mm et par exemple pour une fibre de 600 µm. Grâce à cette performance particulièrement remarquable, les pertes optiques résultant du trajet aller et retour de la lumière à l'intérieur de la cellule 12 sont suffisamment réduites pour que la portée du système de détection atteigne au moins une distance de 2 mètres (4 mètres aller et retour).

Afin de contribuer encore à l'amélioration de la sensibilité du système, il est proposé de réduire les pertes optiques en supprimant une partie des signaux optiques parasites créés à l'émission par la lentille 34, le cube séparateur 18 et la face d'entrée de la fibre 20.

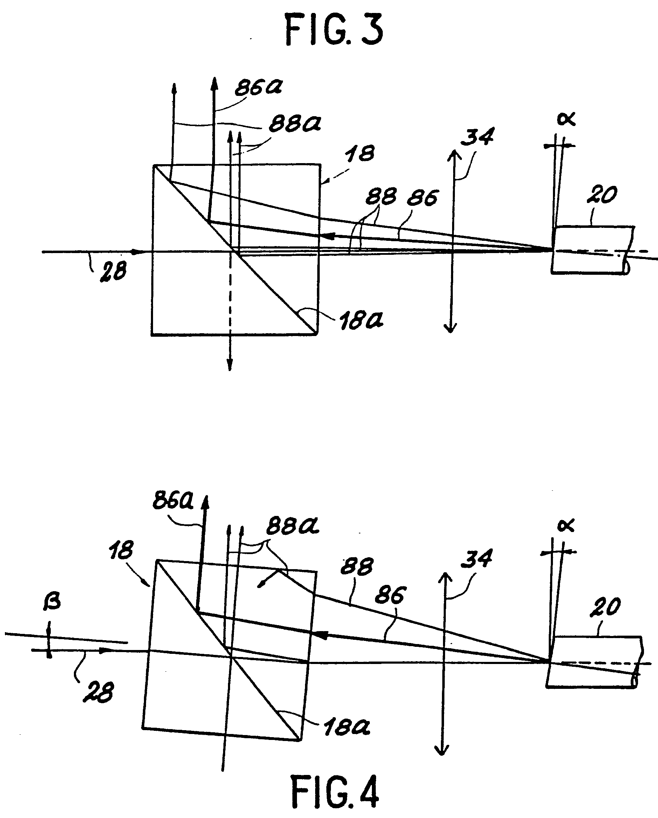

A cet effet, et comme l'illustre la figure 3, on utilise tout d'abord la propriété selon laquelle l'inclinaison du plan de coupe de l'extrémité de la fibre optique 20 par rapport à la normale à son axe géométrique selon un angle α inférieur à l'angle d'acceptance propre de la fibre et, de préférence, voisin de 2,5°, conduit à une inclinaison comparable de l'axe optique 86 du faisceau sortant de la fibre optique par rapport à l'axe géométrique de l'extrémité de celle-ci, alors que les faisceaux parasites 88 créés à ce niveau restent au voisinage de cet axe géométrique ou sont au contraire déviés d'un angle voisin du double de cet angle α. Comme l'illustre la figure 3, ce phénomène est amplifié par la lentille 34 du duplexeur optique et par le cube séparateur 18. Grâce à cette disposition, on comprend qu'en plaçant judicieusement le détecteur 22 dans le prolongement de l'axe optique 86a du faisceau réfléchi par le cube 18 et en choisissant la surface de ce détecteur 22 et la distance qui le sépare du cube séparateur 18, de telle sorte que les faisceaux parasites 88a réfléchis par le cube ne viennent pas heurter le détecteur, on améliore le rapport signal sur bruit du système par élimination d'une grande partie de la lumière parasite.

Comme l'illustre la figure 4, ce résultat peut encore être amélioré en inclinant le cube séparateur 18 d'un angle β inférieur à 20°, et de préférence, voisin de 5° par rapport à sa position normale représentée sur la figure 3. Cette inclinaison a pour effet d'incliner le plan semi-réfléchissant 18a du cube de cet angle β par rapport à un plan de référence faisant un angle de 45° par rapport à l'axe optique 28 du faisceau incident. Comme dans le cas de la figure 3, on voit qu'en disposant le détecteur 22 selon l'axe optique 86a du faisceau réfléchi par le cube 18 et en choisissant judicieusement la surface de ce détecteur et la distance le séparant du cube 18, il est possible de faire en sorte que ce dernier ne reçoive pratiquement aucun des faisceaux parasites 88a réfléchis par le cube.

Dans le mode de réalisation qui vient d'être décrit à titre d'exemple, on a vu que la forme de la lentille hublot 42 peut être modifiée dans certaines proportions, à condition que son épaisseur reste suffisante (au moins 30 à 35 mm) pour assurer sa fonction de hublot de confinement, que son diamètre reste suffisant pour éviter la création de rayons lumineux parasites réfléchis par sa face externe et que ses faces d'entrée et de sortie permettent de transformer le faisceau divergent sortant de la fibre optique en un faisceau parallèle lorsque le positionnement relatif de ces deux éléments est réalisé correctement. De façon comparable, les moyens qui ont été décrits afin de permettre d'assurer ce positionnement relatif peuvent être réalisés de façon différente, notamment lorsque la forme de là lentille est modifiée.

**Revendications**

1. Système de détection optique à distance comprenant:
- une source lumineuse (14) émettant un faisceau lumineux aller (28) focalisé sur une première extrémité d'un conducteur de lumière (20);
- une lentille (42) montée à l'autre extrémité du conducteur de lumière;
- des moyens de réflexion (26) placés en face de ladite lentille (42) et rétro-réfléchissant le faisceau sortant de cette dernière à 180° vers le conducteur de lumière, au travers de ladite lentille;
- des moyens (30) pour séparer le faisceau réfléchi du faisceau aller; et
- des moyens (22) pour mesurer l'intensité lumineuse d'une partie au moins du faisceau réfléchi renvoyé par lesdits moyens de séparation,

ce système étant caractérisé par le fait qu'il est appliqué à la détection optique à distance d'objets (13) se déplaçant selon un trajet donné à l'intérieur d'une enceinte de confinement d'une cellule étanche (12); le conducteur de lumière étant une fibre optique monobrin (20), et la lentille (42) étant une lentille épaisse servant de hublot étanche pour l'enceinte de confinement et transformant le faisceau lumineux aller sortant de ladite autre extrémité de la fibre optique (20) en un faisceau quasiment parallèle coupant le trajet des objets à détecter; un embout (44) de positionnement et de centrage étant monté de façon étanche dans une paroi (10) de l'enceinte de confinement, et supportant de façon étanche la lentille (42) ainsi qu'une pièce (54) de positionnement et de centrage de ladite autre extrémité de la fibre optique (20), de telle sorte que l'axe optique de la lentille est confondu avec l'axe géométrique de cette autre extrémité; les moyens de réflexion (26) étant placés dans l'enceinte de confinement, en arrière du trajet des objets à détecter, par rapport à la lentille (42), ou placés sur ces objets; et les moyens (30) pour séparer le faisceau réfléchi du faisceau aller étant situés entre ladite source (14) et ladite première extrémité de la fibre optique (20).

2. Systeme de détection selon la revendication 1, caractérisé en ce qu'il comprend de plus un système à seuil (24) sensible au signal délivré par les moyens de mesure (22) pour détecter par tout ou rien la présence ou l'absence d'un objet.

3. Système de détection selon l'une quelconque des revendications 1 et 2, caractérisé en ce que ladite pièce (54) de positionnement et de centrage comporte un piston (58) logé dans un alésage (56) formé dans ledit embout (44) et débouchant vers l'extérieur de la paroi de l'enceinte (10), de telle sorte que ladite autre extrémité de la fibre optique peut être introduite dans l'embout (44) en appliquant un fluide sous pression sur le dit piston (58), ladite pièce (54) supportant de plus des moyens élastiques (70) coopérant avec une partie élargie (56a) dudit alésage (56) pour appliquer ladite pièce (54) contre une butée (64) formée dans l'embout (44).

4. Système de détection selon l'une quelconque des revendications 1 à 3, caractérisé en ce que le plan de coupe de la première extrémité de la fibre optique (20) fait avec la normale à son axe géométrique un angle inférieur à l'angle d'acceptance propre de ladite fibre et en ce que les moyens de séparation (30) comprennent un plan semi-réfléchissant (18a) déviant le faisceau réfléchi d'environ 90° vers les moyens de détection (22).

5. Système de détection selon la revendication 4, caractérisé en ce que le plan semi-réfléchissant (18a) est incliné de moins de 20° par rapport à un plan de référence faisant un angle de 45° par rapport à l'axe optique (28) du faisceau incident.

## Patentansprüche

1. Anordnung zur optischen Detektion von Weiten mit:
- einer Lichtquelle (14), die ein auf ein erstes Ende eines Lichtleiters (20) fokussiertes einfallendes Lichtbündel (28) ausstrahlt;
- einer Linse (42), die an dem anderen Ende des Lichtleiters befestigt ist;
- einer Reflexionsvorrichtung (26), die sich gegenüber der Linse (42) befindet und das von letzterer ausgehende Bündel um 180° gegen den Lichtleiter durch diese Linse hindurch zurückreflektiert;
- einer Vorrichtung (30) zum Trennen des reflektierten Lichtbündels vom einfallenden Lichtbündel;
einer Vorrichtung (22) zum Messen der Lichtintensität eines Tells wenigstens des von der Vorrichtung zum Trennen zurückgestrahlten reflektierten Bündels, wobei die Anordnung gekennzeichnet ist durch die Tatsache, daß sie zur optischen Detektion von Weiten von Objekten (13) angewandt wird, die sich entlang einer gegebenen Bahn innerhalb einer Sicherheitshülle einer undurchlässigen Zelle (12) bewegen; wobei der Lichtleiter eine einfaserige optische Faser (20) und die Linse (42) eine dicke Linse ist, die als undurchlässiges Abschirmfenster für die Sicherheitshülle dient und das einfallende Lichtbündel, das aus dem anderen Ende der optischen Faser (20) austritt, in ein quasi-paralleles Bündel umwandelt, das die Bahn der zu detektierenden Objekte schneidet; wobei ein Positionier- und Zentriereinsatz (44) undurchlässig in eine Wand (10) der Sicherheitshülle montiert ist und undurchlässig die Linse (42) ebenso wie das Positionier- und Zentrierteil (54) des anderen Endes der optischen Faser (20) derart trägt, daß die optische Achse der Linse mit der geometrischen Achse dieses anderen Endes zusammenfällt; wobei die Reflexionsvorrichtung (26) sich in der Sicherheitshülle in Bezug auf die Linse (42) hinter der Bahn der zu detektierenden Objekte oder über diesen Objekten befindet; und wobei die Vorrichtung (30) zum Trennen des reflektierten Lichtbündels vom einfallenden Lichtbündel sich zwischen der Quelle (14) und dem ersten Ende der optischen Faser (20) befindet.

2. Anordnung zur optischen Detektion nach Anspruch 1, dadurch gekennzeichnet, daß sie weiterhin eine Schwellenanordnung (24) aufweist, die auf das von der Meßvorrichtung (22) abgegebene Signal empfindlich ist, um in der Art von alles oder nichts die Gegenwart oder Abwesenhelt eines Objekts zu detektieren.

3. Anordnung zur optischen Detektion nach einem der Ansprüche 1 und 2, daurch gekennzeichnet, daß das Positionier- und Zentrierstück (54) einen in einer Bohrung (56) untergebrachten Stempel (58) aufweist, wobei die Bohrung in dem Einsatz (44) gebildet ist und so zum äußeren Teil der Wand der Hülle (10) mündet, daß das andere Ende der optischen Faser in den Einsatz (44) eingeführt werden kann, indem eine unter Druck stehende Flüssigkeit auf den Stempel (58) wirkt, wobei das Teil (54) außerdem eine elastische Vorrichtung (70) trägt, die mit einem verbreiterten Teil (56a) der Bohrung (56) zusammenwirkt, um das Teil (54) gegen einen in dem Einsatz gebildeten Anschlag (64) zu pressen.

4. Anordnung zur optischen Detektion nach einem der Ansprüche 1-3, dadurch gekennzeichnet, daß die Schnittfläche des ersten Endes der optischen Faser (20) mit der Normalen ihrer geometrischen Achse einen Winkel einschließt, der niedriger ist als der Eigenakzeptanzwinkel der Faser, und daß die Trennvorrichtung (30) eine halbreflektierende Ebene (18a) aufweist, die das reflektierende Bündel um ungefähr 90° gegen die Detektionsvorrichtung (22) ablenkt.

5. Anordnung zur optischen Detektion nach Anspruch 4, dadurch gekennzeichnet, daß die halbreflektierende Ebene (18a) wenigstens um 20° gegen eine Referenzebene geneigt ist, die mit der optischen Achse (28) des einfallenden Bündels einen Winkel von 45° einschließt.

## Claims

1. Optical remote detection system comprising:
- a light source (14) emitting an outgoing light beam (28) focused on a first end of a light guide (20);
- a lens (42) mounted at the other end of the light guide;
- reflection means (26) placed opposite the said lens (42) and retroreflecting the beam leaving the latter at 180° towards the light guide via the said lens;
- means (30) for separating the reflected beam from the outgoing beam; and
- means (22) for measuring the luminous intensity of at least part of the reflected beam returned by the said separating means,
this system being characterized in that it is used for the optical remote detection of objects (13) moving along a given path inside a containment of a sealed cell (12); the light guide being a single-strand optical fibre (20), and the lens (42) being a thick lens serving as a sealed window for the containment and converting the outgoing light beam leaving the said other end of the optical fibre (20) into a virtually parallel beam intersecting the path of the objects to be detected; and a positioning and centring socket (44) being mounted sealingly in a wall (10) of the containment and sealingly supporting the lens (42) and a piece (54) for the positioning and centring of the said other end of the optical fibre (20), in such a way that the optical axis of the lens coincides with the geometrical axis of this other end; the reflection means (26) being placed in the containment at the rear of the path of the objects to be detected, in relation to the lens (42), or placed on these objects; and the means (30) for separating the reflected beam from the outgoing beam being located between the said source (14) and the said first end of the optical fibre (20).

2. Detection system according to Claim 1, characterized in that it comprises, furthermore, a threshold system (24) sensitive to the signal supplied by the measuring means (22), to detect the presence or absence of an object in the all-or-nothing mode.

3. Detection system according to either one of Claims 1 and 2, characterized in that the said positioning and centring piece (54) comprises a piston (58) seated in a bore (56) formed in the said socket (44) and opening onto the outside of the wall of the containment (10), in such a way that the said other end of the optical fibre can be introduced into the socket (44) by applying a pressurized fluid to the said piston (58), the said piece (54) moreover supporting elastic means (7) interacting with a widened part (56a) of the said bore (56) in order to lay the said piece (54) against an abutment (64) formed in the socket (44).

4. Detection system according to any one of Claims 1 to 3, characterized in that the sectional plane of the first end of the optical fibre (20) forms with the perpendicular to its geometrical axis an angle smaller than the inherent angle of acceptance of the said fibre, and in that the separating means (30) comprise a semi-reflecting plane (18a) deflecting the reflected beam through approximately 90° towards the detection means (22).

5. Detection system according to claim 4, characterized in that the semi-reflecting plane (18a) is inclined at less than 20° in relation to a reference plane forming an angle of 45° relative to the optical axis (28) of the incident beam.

FIG.1

EP 0 165 116 B1

FIG.2

# FIG. 3

# FIG. 4